(19) Europäisches Patentamt
European Patent Office
Office européen des brevets

(11) EP 1 220 609 B1

(12) EUROPEAN PATENT SPECIFICATION

(45) Date of publication and mention of the grant of the patent:
**03.12.2003 Bulletin 2003/49**

(21) Application number: **00972742.1**

(22) Date of filing: **12.10.2000**

(51) Int Cl.[7]: **A01N 43/40**

(86) International application number:
**PCT/EP00/10040**

(87) International publication number:
**WO 01/026466 (19.04.2001 Gazette 2001/16)**

(54) **SYNERGISTIC HERBICIDAL METHODS AND COMPOSITIONS**

SYNERGISTISCHE HERBIZIDE ZUSAMMENSETZUNGEN UND VERFAHREN

PROCEDES ET COMPOSITIONS HERBICIDES SYNERGIQUES

(84) Designated Contracting States:
**AT BE CH CY DE DK ES FI FR GB GR IE IT LI LU MC NL PT SE**
Designated Extension States:
**AL LT LV MK RO SI**

(30) Priority: **14.10.1999 US 159383 P**

(43) Date of publication of application:
**10.07.2002 Bulletin 2002/28**

(60) Divisional application:
**03017669.7**

(73) Proprietor: **BASF AKTIENGESELLSCHAFT
67056 Ludwigshafen (DE)**

(72) Inventors:
- **PIDSKALNY, Ronald, Steven
Edmonton, Alberta T6H 0Z9 (CA)**
- **KILLINS, Roy, Allan
Lethbridge, Alberta T1H 1H1 (CA)**

(56) References cited:

**EP-A- 0 188 815**
**EP-A- 0 273 668**
**WO-A-01/01777**
**WO-A-94/07368**
**US-A- 4 427 440**
**US-A- 5 296 449**

- **BRITISH CROP PROTECTION COUNCIL: "THE PESTICIDE MANUAL, TENTH EDITION" , PESTICIDE MANUAL,GB,FARNHAM, BCPC, VOL. ED. 10, PAGE(S) 1335-1341 XP002031460 ISBN: 0-948404-79-5 see page 1336, entries "aryloxyalkanoic acid" and "2-(4-aryloxyphenoxy)propionic acid"**
- **DATABASE CROPU [Online] Derwent Publication Ltd.; WHITE R H ET AL: "AC 900001: a new herbicide for broadleaf weed control in cereals." retrieved from STN Database accession no. 2000-80154 XP002161327 -& PROC.BR.CROP PROT.CONF.WEEDS (1999, VOL.1, 47-52) 1 FIG. 3 TAB. CODEN: PBCWDF, XP000989500 Am.Cyanamid;Cyanamid**
- **DATABASE CROPU [Online] Derwent Publication Ltd; SANDMANN G ET AL: "Phytoene Desaturase, the Essential Target for Bleaching Herbicides." retrieved from STN Database accession no. 1991-88189 XP002161328 & WEED SCI. (39, NO. 3, 474-79, 1991) 7 FIG. 1 TAB. 34 REF. CODEN: WEESA6,**
- **DATABASE CROPU [Online] Derwent publication Ltd. ; SALEMBIER J F: "Research on the Complementation of Isoproturon and Foliar Anti-Grass Herbicides. (Recherche de la Complementarite de L'isoproturon Avec des Herbicides a Action Antigraminee Foliair)" retrieved from STN Database accession no. 1991-82508 XP002170514 & MEDED.FAC.LANDBOUWWET.RIJKSUNIV.GENT (55, NO. 3B, 1177-86, 1990) 7 TAB. CODEN: MFLRA3,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Aryloxypicolinamides such as those described in U.S. 5,294,597 demonstrate excellent herbicidal activity, in particular against broadleaf weeds in cereal crops. However, said aryloxypicolinamides, when used as the sole active ingredient, do not always achieve effective control of the full spectrum of weed species encountered in commercial agronomic practice at application rates required for acceptable crop safety. Such gaps in the spectrum of control can often be remedied by co-treatment with another herbicide known to be effective against the relevant weed species. It has been disclosed (U.S. 5,674,807) that selected combinations of aryloxypicolinamides produce not merely the expected additive effect, but may exhibit a significant synergistic effect (i.e., the combination shows a much higher level of activity than that which could be predicted from that of the individual components). This synergistic effect enables a greater margin of safety for the crop species. However, the disclosure is limited to two-way combinations of aryloxypicolinamides and members of selected known chemical classes which do not include herbicidal partners in the imidazolinone, cyclohexanedione, aryloxy-phenoxypropionic acid, or pyridinecarboxylic acid classes. Moreover, although the phenoxyacetic acid chemical class is disclosed, 2,4-dichlorophenoxyacetic acid (2,4-D), its esters and salts are not specifically exemplified.

Therefore it is an object of this invention to provide synergistic, crop-selective herbicidal combinations with broad-spectrum weed control.

It is another object of this invention to provide herbicidal compositions useful for the synergistic control of a broad-spectrum of weeds in the presence of a crop.

Although aryloxypicolinamide compounds demonstrate excellent herbicidal activity, when applied alone they do not always achieve the desired spectrum of weed control at rates required for acceptable crop safety. Surprisingly, it has now been found that a two-way combination comprising an aryloxypicolinamide compound of formula I

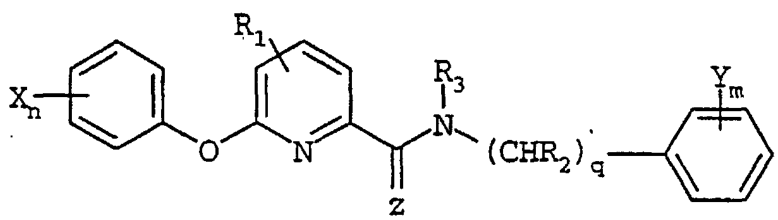

I

wherein

Z represents an oxygen or sulfur atom;

$R_1$ represents a hydrogen or halogen atom or an alkyl or haloalkyl group;

$R_2$ represents a hydrogen or an alkyl group;

q is 0 or 1;

$R_3$ represents a hydrogen or an alkyl or alkenyl group; the or each group X independently represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, alkylamido, nitro, alkylthio, haloalkylthio, alkenylthio, alkynylthio, alkylsulphinyl, alkylsulphonyl, alkyloxyminoalkyl or alkenyloximinoalkyl group;

n is 0 or an integer from 1 to 5;

the or each group Y independently represents a halogen atom or an alkyl, nitro, cyano, haloalkyl, alkoxy or haloalkoxy group; and

m is 0 or an integer from 1 to 5

or one of its environmentally compatible salts;

plus a second herbicide which is an imidazolinone herbicide. Further, unexpectedly, a selected three-way combination comprising an aryloxypicolinamide compound of formula I, a second herbicide which is an imidazolinone herbicide and 2,4-D or one of its environmentally compatible esters or salts. Advantageously, the synergistic two-way and three-way combinations of the invention allow for lower application rates of said aryloxypicolinamide with concomittant increased spectrum of weed control. Moreover, the synergistic herbicidal methods and compositions of the invention allow for effective resistance management.

The present invention provides a method for the synergistic control of undesirable plants such as Polygonum, Kochia, Galeopsis, Galium, Stelaria, Sinapis, and Avena which comprises applying to the locus of said plants or to the

foliage or stems of said plants a synergistically effective amount of a two-way combination comprising an aryloxypicolinamide compound of formula I plus a second herbicide which is an imidazolinone herbicide. The present invention also provides a method for the synergistic control of undesirable plants which comprises applying to the locus of said plants a synergistically effective amount of a three-way combination comprising an aryloxypicolinamide compound of formula 1, a second herbicide which is an imidazolinone herbicide 2,4-D or one of its environmentally compatible esters or salts.

The present invention also provides a synergistic herbicidal composition which comprises an agriculturally acceptable carrier and a synergistically effective amount of a two-way combination of an aryloxypicolinamide compound of formula I plus á second herbicide which is an imidazolinone herbicide; or a three-way combination of an aryloxypicolinamide compound of formula I, a second herbicide which is an imidazolinone herbicide 2,4-D or one of its environmentally compatible esters or salts.

Aryloxypicolinamides of formula I

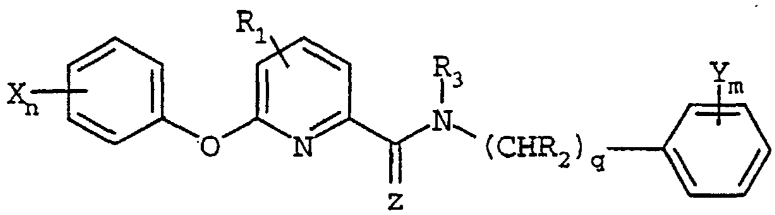

I

wherein Z, $R_1$, $R_2$, $R_3$, X, n, Y and m are defined herein above and methods for their preparation are described in U. S. 5,294,597. Said aryloxypicolinamides demonstrate excellent herbicidal activity, in particular against broadleaf weeds in cereal crops. However, said aryloxypicolinamides when used as the sole active ingredient do not always achieve effective control of the full spectrum of weed species encountered in commercial agronomic practice, in conjunction with reliable selectivity for the crop species.

Surprisingly, it has now been found that a two-way combination of an aryloxypicolinamide of formula I and a second herbicide which is an imidazolinone herbicide provides synergistic control of troublesome weeds such as *Polygonum, Kochia, Galeopsis, Galium, Stelaria, Sinapis, and Avena*. Also, surprisingly, a three-way combination of an aryloxypicolinamide of formula I, a second herbicide which is an imidazolinone herbicide and 2,4-D or one of its environmentally compatible esters or salts provides synergistic weed control. That is, the application of the two-way or three-way combinations of the invention gives a mutual reinforcing action such that the application rates of the individual herbicidal components can be reduced and still the same herbicidal effect is achieved or, alternatively, the application of the combination of herbicidal components demonstrates a greater herbicidal effect than expected from the effect of the application of the individual herbicidal components when applied singly at the rate at which they are present in the combination (synergistic effect).

The aryloxypicolinamides of formula I may exist in the form of their environmentally compatible salts. Suitable salts are, in general, the salts of those cations, or the acid addition salts of those acids, whose cations, or anions, respectively, do not adversely affect the herbicidal action of the active ingredients.

Suitable cations are, in particular, ions of the alkali metals, preferably lithium, sodium and potassium, of the alkaline earth metals, preferably calcium and magnesium, and of the transition metals, preferably manganese, copper, zinc and iron, and also ammonium, it being possible in this case, if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, tetramethylammonium, tetrabutylammonium, 2-(2-hydroxyeth-1-oxy)eth-1-yl ammonium, di(2-hydroxyeth-1-yl)ammonium, trimethylbenzylammonium, furthermore phosphonium ions, sulfonium ions, preferably tri($C_1$-$C_4$-alkyl)sulfonium and sulfoxonium ions, preferably, tri ($C_1$-$C_4$-alkyl)sulfoxonium.

Anions of suitable acid addition salts are mainly chloride, bromide, fluoride, hydrogen sulfate, sulfate, dihydrogen phosphate, hydrogen phosphate, nitrate, hydrogen carbonate, carbonate, hexafluorosilicate, hexafluorophosphate, benzoate and the anions of $C_1$-$C_4$-alkanoic acids, preferably formate, acetate, propionate and butyrate.

In the specification and claims, the term 2,4-D designates 2,4-dichlorophoxyacetic acid. 2,4-D may also exist

in the form of its environmentally compatible esters or salts.
Suitable salts are, in general, the salts of those cations, which do not adversely affect the herbicidal action of the active ingredients.

Suitable cations are, in particular, ions of the alkali metals, preferably lithium, sodium and potassium, of the alkaline earth metals, preferably calcium or magnesium, and of the transition metals, preferably manganese, copper, zinc and iron, and also ammonium, it being possible in this case if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, (2-hydroxy-eth-1-yl)ammonium, di(2-hydroxy-eth-1-yl)ammonium or tri(2-hydroxy-eth-1-yl)ammonium, Expecially suitable cations are sodium, dimethylammonium, di (2-hydroxy-eth-1-yl)ammonium and tri(2-hydroxy-eth-1-yl)ammonium.

Suitable esters of 2,4-D are the $C_1$-$C_8$-alkyl esters, for example the methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 2,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl; 2,3-dimethylbutyl, 3,3-dimethylbutyl, 1-ethylbutyl, 2-ethylbutyl, 1,1,2-trimethylpropyl, 1-ethyl-1-methylpropyl, 1-ethyl-3-methyl-propyl, heptyl, 5-methyl-1-hexyl, octyl, 6-methyl-1-heptyl, 2-ethyl-1-hexyl or 4-ethyl-1-hexyl esters, or the $C_1$-$C_4$-alkoxy-$C_1$-$C_4$-alkyl esters for example the methoxymethyl, ethoxymethyl, propoxymethyl, (1-methylethoxy)methyl, butoxymethyl, (1-methylpropoxy)methyl, (2-methylpropoxy)-methyl, (1,1-dimethylethoxy)methyl, 2-(methoxy)ethyl, 2-(ethoxy)ethyl, 2- (propoxy) ethyl, 2-(1-methylethoxy)ethyl, 2-(butoxy)ethyl, 2-(1-methylpropoxy)ethyl, 2-(2-methylpropoxy) ethyl, 2-(1,1-dimethylethoxy)ethyl, 2-(methoxy)propyl, 2-(ethoxy)propyl, 2-(propoxy)propyl, 2-(1-methylethoxy)-propyl, 2-(butoxy)propyl, 2-(1-methylpropoxy)propyl, 2-(2-methylpropoxy)propyl, 2-(1,1-dimethylethoxy)propyl, 3-(methoxy)propyl, 3-(ethoxy)-propyl, 3-(propoxy)propyl, 3-(1-methylethoxy)propyl, 3-(butoxy)propyl, 3-(1-methylpropoxy)propyl, 3-(2-methylpropoxy)propyl, 3-(1,1-dimethylethoxy)propyl, 2-(methoxy)butyl, 2-(ethoxy)butyl, 2-(propoxy)butyl, 2-(1-methylethoxy)butyl, 2-(butoxy)butyl, 2-(1-methylpropoxy)butyl, 2-(2-methylpropoxy)butyl, 2-(1,1-dimethylethoxy) butyl, 3-(methoxy)butyl, 3-(ethoxy)-butyl, 3-(propoxy)butyl, 3-(methylethoxy)butyl, 3-(butoxy)butyl), 3-(1-methylpropoxy)butyl, 3-(2-methylpropoxy)butyl, 3-(1,1-dimethylethoxy)butyl, 4-(methoxy)butyl, 4-(ethoxy)butyl, 4 - (propoxy) butyl, 4-(1-methylethoxy)butyl, 4-(butoxy)butyl, 4-(1-methylpropoxy)butyl, 4-(2-methylpropoxy)butyl or 4-(1,1,-dimethylethoxy)butyl esters;

Especially suitable esters are the 1-methyl-1-ethyl, butyl, 6-methyl-1-heptyl, 2-ethyl-1-hexyl or 2-butoxy-1-ethyl esters.

Examples of an imidazolinone herbicide suitable for use in the methods and compositions of the invention include imazapyr, imazethapyr, imazapic, imazaquin, imazamox, imazamethabenz methyl, imazamethapyr or the like or one of its environmetntally compatible salts, preferably imazamethabenz methyl. Suitable salts are in general, the salts of those anions which do not adversely affect the herbicidal action of the active ingredient. They are similar to those listed for the compounds of formula I.

In the specification and claims, the term alkyl (alone or in combination) represents a $C_1$-$C_6$-alkyl group, especially a $C_1$-$C_4$-alkyl group; the term alkoxy (alone or in combination) represents a $C_1$-$C_6$-alkoxy group, especially a $C_1$-$C_4$-alkoxy group; the term alkenyl (alone or in combiantion) represents a $C_3$-$C_6$-alkenyl group, especially a $C_3$-$C_4$-alkenyl group; the term alkynyl represents a $C_3$-$C_6$-alkynyl group, especially a $C_3$-$C_4$-alkynyl group.

Preferred synergistic combinations of the invention are those two-way or three-way combinations containing a formula I aryloxypicolinamide wherein

Z is oxygen;
$R_1$ is hydrogen;
q is 0;
$R_3$ is hydrogen;
X is haloalkyl; and
Y is hydrogen or fluorine.

Especially those two-way or three-way combinations containing a formula I aryloxypicolinamide wherein n=1 and X is linked in meta-position to the phenyl radical (with regard to the oxygen bridge).

More preferred synergistic two-way and three-way combinations are those wherein the formula I compound is N-(4-fluorophenyl)-6-[3-trifluoromethyl)phenoxy]-2-pyridine carboxamide ilustrated below , and hereinafter designated, picolinafen.

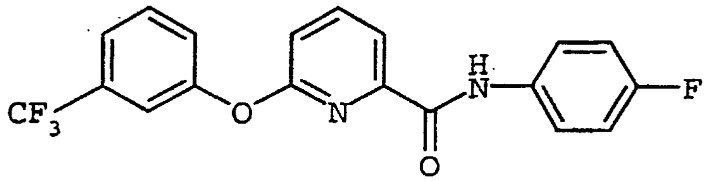

picolinafen

Preferred second herbicide for the two-way combinations of the invention is imazamethabenz methyl tralkoxydim or clopyralid.
In actual practice, the combination of the invention may be applied simultaneously (as a tank mix or a premix), separately or sequentially.
Thus, in accordance with the method of invention a synergistically effective amount of a two-way combination of aryloxypicolinamide and a second herbicide which is its an imidazolinone herbicide; or a synergistically effective amount of a three-way combination of an aryloxypicolinamide, a second herbicide which is an imidazolinone herbicide and 2,4-D, or one of its environmentally compatible salts or esters is applied to the locus, foliage or stems of undesirable plants, particularly plants selected from the genera Polygonum, Kochia, Galeopsis, Galium, Stelaria, Sinapis, and Avena, optionally in the presence of a crop, preferably a cereal crop such as wheat, barley, rice, corn, rye or the like.
The synergistically effective amount of the two- and three-way combinations described above may vary according to prevailing conditions such as the particular second and third component present, weed pressure, application timing, weather conditions, soil conditions, mode of application, topographical character, target crop species and the like.
Preferred two-way combinations of the invention are those wherein the weight/weight ratio of the aryloxypicolinamide of formula I to the second compound is about:
aryloxypicolinamide:imidazolinone herbicide, 1:1 to 1:35;
More preferred two-way combinations of the invention are those wherein the weight/weight ratio of picolinafen to the second component is about:

picolinafen:imazethabenz methyl, 1:1 to 1:35;

Preferred three-way combinations of the invention are those wherein the weight/weight ratio of the aryloxypicolinamide of formula I to 2,4-D (or its salts or esters) to third component is about:

aryloxypicolinamide: 2,4 D (or its salts or esters): imidazolinone herbicide, 1:1:1 to 1:35:25;

More preferred three-way combinations of the invention are those wherein the weight/weight/weight ratio of picolinafen to 2,4-D to third component is about:

picolinafen:2,4-D:imazamethabenz methyl, 1:1:1 to 1:35:25;

The present invention also provides a synergistic herbicidal composition comprising an agriculturally acceptable carrier and a synergistically effective amount of a two-way combination of an aryloxypicolinamide of formula I and a second herbicidal compound which is an imidazolinone herbicide. The present invention further provides a synergistic herbicidal composition which comprises an agriculturally acceptable carrier and a synergistically effective amount of a three-way combination of an aryloxypicolinamide compound of formula I, a second herbicide which is an imidazolinone herbicide 2,4-D, or one of its environmentally compatible salts or esters.
The agriculturally acceptable carrier may be a solid or a liquid, preferably a liquid, more preferably water. While not required, the combination compositions of the invention may also contain other additives such as fertilizers, inert formulation aids, i.e. surfactants, emulsifiers, defoamers, dyes, extenders or any of the conventional inert ingredients typically employed in herbicidal formulated products.
Compositions according to the invention may be formulated in any conventional form, for example in the form of a twin pack, or as an aqueous concentrate, soluble granular, dispersible granular or the like.
Preferred two-way combination compositions of the invention are those compositions wherein the aryloxypicolinamide compound is picolinafen. Also preferred are those synergistic two-way combination compositions having a second herbicide which is imazamethabenz methyl. More preferred two-way combination compositions of the invention are those compositions of the invention wherein the weight/weight ratio of picolinafen to second component is

about:

picolinafen:imazethabenz methyl, 1:1 to 1:35;

Preferred three-way combination compositions of the invention are those compositions wherein the picolinamide compound is picolinafen. Also preferred are those synergistic three-way combination compositions having a third herbicide which is 2,4-D or one of its environmentally compatible salts or esters. More preferred three-way combination compositions of the invention are those compositions wherein the weight/weight/-weight ratio of picolinafen to 2,4-D to second component is about:

picolinafen:2,4-D:imazamethabenz methyl, 1:1:1 to 1:35:25;

For a more clear understanding of the invention, specific examples thereof are set forth below. These examples are merely illustrative, and are not to be understood as limiting the scope and underlying principles of the invention in any way.

In the following examples, synergism for two-way combinations is determined by the Colby method (S.R. Colby, Weeds 1967 (15), 20), i.e. the expected (or predicted) response of the combination is calculated by taking the product of the observed response for each individual component of the combination when applied alone divided by 100 and subtracting this value from the sum of the observed response for each component when applied alone. Synergism of the combination is then determined by comparing the observed response of the combination to the expected (or predicted) response as calculated from the observed responses of each individual component alone. If the observed response of the combination is greater than the expected (or predicted) response then the combination is said to be synergistic and falls within the definition of synergistic effect as previously defined.

The foregoing is illustrated mathematically below, wherein a two-way combination, $C_2$, is composed of component X plus component Y and Obs. designates the observed response of the combination $C_2$.

$$(X + Y) - \frac{XY}{100} = \text{Expected response (Exp.)}$$

Synergism ≡ Obs. > Exp.

In similar manner for the case of three-way combination, $C_3$, is composed of component X plus component Y plus component X and Obs. designates the observed response of the combination $C_3$.

$$(X + Y + Z) - \frac{(XY+XZ+YZ)}{100} + \frac{XYZ}{10000} = \text{Exp.}$$

Synergism ≡ Obs. > Exp.

In the following examples, crop tolerance ratings are taken periodically throughout the growing season. The first rating is taken one to two weeks after treatment and the final rating is taken just prior to harvest. For all treatments described in the following examples crop tolerance was commercially acceptable, i.e. ≤ 20% injury, on each of the three crops tested. None of the treatments demonstrated commercially unacceptable injury to barley, durum wheat or hard red spring wheat.

## EXAMPLE 1

Evaluation of the Herbicidal Activity of a Combination of Picolinafen and 2,4-Dichlorophenoxyacetic Acid

Grassy and broadleaved weeds are either seeded perpendicular to the direction of the crop or broadcast in early to mid-May. The crop is seeded after the weed seed. Row width is 18 cm. The seed is drilled in with a Roger's 1.8 m width drill to a depth of 5 cm.

All trials employ standard accepted weed science procedures. Applications are made with a Roger's $CO_2$-powere shrouded sprayer. Test design is a modified randomized complete block design with four replications. All applications are made post-emergence to the weeds and crop.

The test solutions are prepared by tank-mixing sufficient quantities of aqueous solutions and/or dispersions of the test compounds.

The treated plots are examined at intervals during the growing season and rated for percent control of weeds and crop injury. The data listed is an average of the replicates for that treatment. The Colby method of analysis is used to determine the resultant biological effect of the combination treatment as compared to the biological effect of each component when applied alone. The data are reported in Table I.

As can be seen from the data shown in Table I, application of a combination of picolinafen plus 2,4-D gave significantly greater weed control than that which could be predicted from the weed control resulting from the application of either picolinafen alone or 2,4-D alone.

TABLE I

| Evaluation of the Herbicidal Activity of a Combination of Picolinafen plus 2,4-D | | | | |
|---|---|---|---|---|
| *Weed Species* | *picolinafen 50g/ha* | *2,4-D 280g/ha* | *picolinafen + 2,4-D 50g/ha + 280 g/ha* | |
| | **Percent Control** | | **Observed** | **Expected** |
| *Avena fatua* | *5* | *2* | *15* | *7* |
| *Chenopodium album* | *57* | *91* | *97* | *96* |
| *Polygonum convolvulus* | *54* | *48* | *80* | *76* |
| *Galeopsis tetrahit* | *59* | *2* | *70* | *60* |
| *Polygonum (smartweed) spp.* | *26* | *53* | *85* | *65* |
| *Vaccaria pyramaidata* | *63* | *51* | *97* | *82* |

EXAMPLE 2

Evaluation of the Herbicidal Activity of a Combination of Picolinafen and Imazamethabenz Methyl

Following essentially the same procedure described in Example 1 and employing picolinafen and imazamethabenz methyl, the data shown in Table II are obtained.

As can be seen from the data in Table II, the application of a combination of picolinafen plus imazamethabenz methyl gives significantly greater weed control than that which could be predicted from the weed control resulting from the application of either picolinafen alone or imazamethabenz methyl alone.

TABLE II

Evaluation of the Herbicidal Activity of a Combination of Picolinafen plus Imazamethabenz Methyl

| Weed Species | *picolinafen* *50g/ha* | *imazamethabenz methyl* *400g/ha* | *picolinafen + imazamethabenz methyl* *50g/ha + 400 g/ha* | |
|---|---|---|---|---|
| | Percent Control | | Observed | Expected |
| *Avena fatua* | 5 | 88 | 91 | 89 |
| *Setaria viridis* | 14 | 10 | 42 | 23 |
| *Brassica napus* (*Imidazolinone tolerant*) | 65 | 0 | 86 | 65 |
| *Chenopodium album* | 57 | 18 | 86 | 65 |
| *Galeopsis tetrahit* | 59 | 4 | 76 | 61 |
| *Galium aparine* | 28 | 48 | 90 | 63 |
| *Polygonum spp.* | 26 | 76 | 84 | 82 |
| *Kochia scoparia* | 59 | 31 | 85 | 72 |
| *Salsola kali* | 56 | 9 | 79 | 60 |
| *Vaccaria pyramaidata* | 63 | 20 | 77 | 70 |

EXAMPLE 3

Evaluation of the Herbicidal Activity of a Combination of Picolinafen, Imazamethabenz Methyl and 2,4-D

Following essentially the same procedure as described in Example 1 and employing picolinafen, 2,4-D and imazamethabenz methyl, the data shown in Table VI are obtained.

As can be seen from the data on Table VI, the application of a combination of picolinafen, 2,4-D and imazamethabenz methyl gives significantly greater weed control than that which could be predicted from the weed control resulting from the application of picolinafen alone, 2,4-D alone or imazamethabenz methyl alone.

TABLE VI

Evaluation of the Herbicidal Activity of a Combination of Picolinafen, 2,4-D and Imazamethabenz Methyl

| Weed Species | picolinafen 50g/ha | imazamethabenz methyl 400 g/ha | 2,4-D 280g/ha | picolinafen + 2,4-D + imazamethabenz methyl 50g/ha + 280g/ha + 400g/ha | |
|---|---|---|---|---|---|
| | Percent Control | | | Observed | Expected |
| *Avena fatua* | 5 | 88 | 2 | 91 | 89 |
| *Setaria viridis* | 14 | 10 | 0 | 49 | 23 |
| *Stellaria media* | 64 | 8 | 10 | 86 | 70 |
| *Galeopsis tetrahit* | 59 | 4 | 2 | 82 | 61 |
| *Galium aparine* | 28 | 48 | 43 | 94 | 79 |
| *Polygonum spp.* | 26 | 76 | 53 | 99 | 92 |
| Kochia scoparia | 59 | 31 | 52 | 93 | 86 |
| Salsola kali | 56 | 9 | 35 | 97 | 74 |
| *Vaccaria pyramaidata* | 63 | 20 | 51 | 93 | 85 |

## Claims

**1.** A synergistic herbicidal composition which comprises an agriculturally acceptable carrier and a synergistically effective amount of a two-way combination of:

an aryloxypicolinamide of formula I

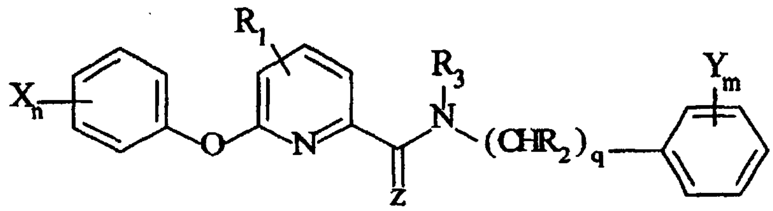

I

wherein

Z represents an oxygen or sulfur atom;

$R_1$ represents a hydrogen or halogen atom or an alkyl or haloalkyl group;

$R_2$ represents a hydrogen or an alkyl group;

q is 0 or 1;

$R_3$ represents a hydrogen or an alkyl or alkenyl group;

the or each group X independently represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, alkylamido, nitro, alkylthio, haloalkylthio, alkenylthio, alkynylthio, alkylsulphinyl, alkylsulphonyl, alkyloxyimino-alkyl or alkenyloximinoalkyl group;

n is 0 or an integer from 1 to 5;

the or each group Y independently represents a halogen atom or an alkyl, nitro, cyano, haloalkyl, alkoxy or haloalkoxy group; and

m is 0 or an integer from 1 to 5

or one of its environmentally compatible salts;
and a second herbicide which is an imidazolinone herbicide.

**2.** The composition according to claim 1 having a formula I aryloxypicolinamide wherein

Z is oxygen;

$R_1$ is hydrogen;

q is 0;

$R_3$ is hydrogen;

X is haloalkyl; and

Y is hydrogen or fluorine.

3. The composition according to claim 2 wherein said formula I aryloxypicolinamide is picolinafen.

4. The composition according claim 1 wherein the second herbicide is imazamethabenz methyl.

5. The composition according to claim 4 wherein said formula I aryloxypicolinamide is picolinafen.

6. A synergistic herbicidal composition which comprises an agriculturally acceptable carrier and a synergistically effective amount of a three-way combination consisting essentially of:

an aryloxypicolinamide of formula I

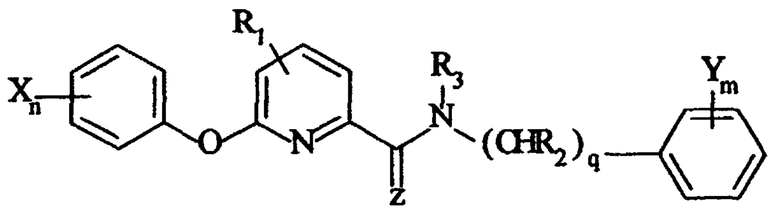

I

wherein

Z represents an oxygen or sulfur atom;

$R_1$ represents a hydrogen or halogen atom or an alkyl or haloalkyl group;

$R_2$ represents a hydrogen or an alkyl group;

q is 0 or 1;

$R_3$ represents a hydrogen or an alkyl or alkenyl group;

the or each group X independently represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, alkylamido, nitro, alkylthio, haloalkylthio, alkenylthio, alkynylthio, alkylsulphinyl, alkylsulphonyl, alkyloxyimino-alkyl or alkenyloximinoalkyl group;

n is 0 or an integer from 1 to 5;

the or each group Y independently represents a halogen atom or an alkyl, nitro, cyano, haloalkyl, alkoxy or haloalkoxy group; and

m is 0 or an integer from 1 to 5;

or one of its environmentally compatible salts;
a second herbicide which is an imidazolinone herbicide and a third herbicide which is 2,4-D or one of its environmentally compatible esters or salts.

7. The composition according to claim 6 having a formula I aryloxypicolinamide wherein

Z is oxygen;

$R_1$ is hydrogen;

q is 0;

$R_3$ is hydrogen;

X is haloalkyl; and

Y is hydrogen or fluorine.

**8.** The composition according to claim 7 wherein said formula I aryloxypicolinamide is picolinafen.

**9.** The composition according to claim 6 wherein the second herbicide is imazamethabenz methyl.

**10.** The composition according to claim 9 wherein said formula I aryloxypicolinamide is picolinafen.

**11.** A method for the synergistic control of undesirable plants, which comprises applying to the locus of said plants or to the foliage or stems of said plants a synergistically effective amount of the compositions as claimed in any of claims 1 to 10.

**Patentansprüche**

**1.** Synergistische herbizide Zusammensetzung, die einen landwirtschaftlich unbedenklichen Träger und eine synergistisch wirksame Menge einer Zweierkombination aus
einem Aryloxypicolinamid der Formel I

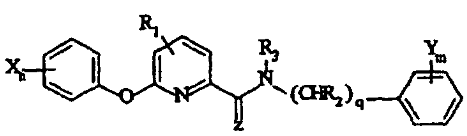

I

in der

Z ein Sauerstoff- oder Schwefelatom bedeutet,

$R_1$ ein Wasserstoff- oder Halogenatom oder eine Alkyl- oder Halogenalkylgruppe bedeutet,

$R_2$ ein Wasserstoffatom oder eine Alkylgruppe bedeutet,

q 0 oder 1 bedeutet,

$R_3$ ein Wasserstoffatom oder eine Alkyl- oder Alkenylgruppe bedeutet,

die oder jede Gruppe X unabhängig ein Halogenatom oder eine gegebenenfalls substituierte Alkyl- oder Alkoxygruppe, vorzugsweise eine Halogenalkylgruppe, oder eine Alkenyloxy-, Cyan-, Carboxy-, Alkoxycarbonyl-, (Alkylthio)carbonyl-, Alkylcarbonyl-, Amido-, Alkylamido-, Nitro-, Alkylthio-, Halogenalkylthio-, Alkenylthio-, Alkinylthio-, Alkylsulfinyl-, Alkylsulfonyl-, Alkyloxyiminoalkyl- oder Alkenyloximinoalkylgruppe bedeutet,

n 0 oder eine ganze Zahl von 1 bis 5 bedeutet,

die oder jede Gruppe Y unabhängig ein Halogenatom oder eine Alkyl-, Nitro-, Cyan-, Halogenalkyl-, Alkoxy- oder Halogenalkoxygruppe bedeutet, und

m 0 oder eine ganze Zahl von 1 bis 5 bedeutet,

oder einem seiner umweltverträglichen Salze
und einem zweiten Herbizid, bei dem es sich um ein Imidazolinonherbizid handelt,
enthält.

**2.** Zusammensetzung nach Anspruch 1 mit einem Aryloxypicolinamid der Formel I, in der

Z Sauerstoff bedeutet,

$R_1$ Wasserstoff bedeutet,

q 0 bedeutet,

$R_3$ Wasserstoff bedeutet,

X Halogenalkyl bedeutet und

Y Wasserstoff oder Fluor bedeutet.

**3.** Zusammensetzung nach Anspruch 2, wobei es sich bei dem Aryloxypicolinamid der Formel I um Picolinafen handelt.

**4.** Zusammensetzung nach Anspruch 1, wobei es sich bei dem zweiten Herbizid um Imazamethabenzmethyl handelt.

**5.** Zusammensetzung nach Anspruch 4, wobei es sich bei dem Aryloxypicolinamid der Formel I um Picolinafen handelt.

**6.** Synergistische herbizide Zusammensetzung, die einen landwirtschaftlich unbedenklichen Träger und eine synergistisch wirksame Menge einer Dreierkombination, die im wesentlichen aus
einem Aryloxypicolinamid der Formel I

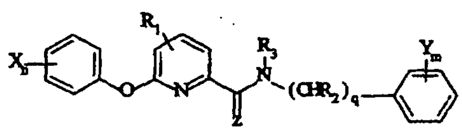

I

in der

Z ein Sauerstoff- oder Schwefelatom bedeutet,

$R_1$ ein Wasserstoff- oder Halogenatom oder eine Alkyl- oder Halogenalkylgruppe bedeutet,

$R_2$ ein Wasserstoffatom oder eine Alkylgruppe bedeutet,

q 0 oder 1 bedeutet,

$R_3$ ein Wasserstoffatom oder eine Alkyl- oder Alkenylgruppe bedeutet,

die oder jede Gruppe X unabhängig ein Halogenatom oder eine gegebenenfalls substituierte Alkyl- oder Alkoxygruppe, vorzugsweise eine Halogenalkylgruppe, oder eine Alkenyloxy-, Cyan-, Carboxy-, Alkoxycarbonyl-, (Alkylthio)carbonyl-, Alkylcarbonyl-, Amido-, Alkylamido-, Nitro-, Alkylthio-, Halogenalkylthio-, Alkenylthio-, Alkinylthio-, Alkylsulfinyl-, Alkylsulfonyl-, Alkyloxyiminoalkyl- oder Alkenyloximinoalkylgruppe bedeutet,
n 0 oder eine ganze Zahl von 1 bis 5 bedeutet,
die oder jede Gruppe Y unabhängig ein Halogenatom oder eine Alkyl-, Nitro-, Cyan-, Halogenalkyl-, Alkoxy- oder Halogenalkoxygruppe bedeutet, und
m 0 oder eine ganze Zahl von 1 bis 5 bedeutet,
oder einem seiner umweltverträglichen Salze,
einem zweiten Herbizid, bei dem es sich um ein Imidazolinonherbizid handelt, und einem dritten Herbizid, bei dem es sich um 2,4-D oder einen/eines seiner umweltverträglichen Ester oder Salze handelt, besteht, enthält.

**7.** Zusammensetzung nach Anspruch 6 mit einem Aryloxypicolinamid der Formel I, in der

Z Sauerstoff bedeutet,

$R_1$ Wasserstoff bedeutet,

q 0 bedeutet,

$R_3$ Wasserstoff bedeutet,

X Halogenalkyl bedeutet und

Y Wasserstoff oder Fluor bedeutet.

**8.** Zusammensetzung nach Anspruch 7, wobei es sich bei dem Aryloxypicolinamid der Formel I um Picolinafen handelt.

**9.** Zusammensetzung nach Anspruch 6, wobei es sich bei dem zweiten Herbizid um Imazamethabenzmethyl handelt.

**10.** Zusammensetzung nach Anspruch 9, wobei es sich bei dem Aryloxypicolinamid der Formel I um Picolinafen handelt.

**11.** Verfahren zur synergistischen Bekämpfung von unerwünschten Pflanzen, **dadurch gekennzeichnet, daß** man auf den Standort der Pflanzen oder auf das Blattwerk oder die Stengel der Pflanzen eine synergistisch wirksame Menge der Zusammensetzungen nach einem der Ansprüche 1 bis 10 ausbringt.

## Revendications

**1.** Composition herbicide synergique, laquelle comprend un support agriculturellement acceptable et une quantité synergique efficace d'une combinaison bilatérale comprenant:

une aryloxypicolinamide répondant à la formule I

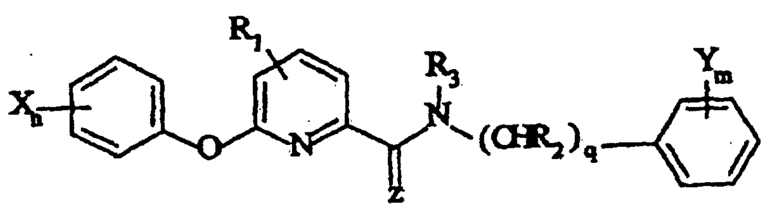

I

dans laquelle

Z représente un atome d'oxygène ou de soufre ;

$R_1$ représente un atome d'hydrogène ou d'halogène ou un groupe alkyle ou halogénoalkyle ;

$R_2$ représente un atome d'hydrogène ou un groupe alkyle ;

q vaut 0 ou 1 ;

$R_3$ représente un atome d'hydrogène ou un groupe alkyle ou alcènyle ;

le ou les groupes X, indépendamment les uns des autres, représentent chacun un atome d'halogène, ou un groupe alkyle ou alcoxy éventuellement substitué, préférentiellement un groupe halogénoalkyle,
ou un groupe alcènyloxy, cyano, carboxy, alcoxycarbonyle, (alkylthio)carbonyle, alkylcarbonyle, amido, alkylamido, nitro, alkylthio, halogénoalkylthio, alcènylthio, alcynylthio, alkylsulfinyle, alkylsulfonyle, alkyloxyiminoalkyle ou alcènyloximinoalkyle ;

n vaut 0 ou un entier de 1 à 5 ;

le ou les groupes Y, indépendamment les uns des autres, représentent chacun un atome d'halogène, ou un groupe alkyle, nitro, cyano, halogénoalkyle, alcoxy ou halogénoalcoxy ; et

m vaut 0 ou un entier de 1 à 5 ;

ou l'un de ses sels compatibles pour l'environnement ;
et un second herbicide, lequel est un herbicide de type imidazolinone.

**2.** Composition selon la revendication 1 répondant à la formule I représentant une aryloxypicolinamide dans laquelle
Z représente un atome d'oxygène ;
$R_1$ représente un atome d'hydrogène ;
q vaut 0 ;
$R_3$ représente un atome d'hydrogène ;
X représente un groupe halogénoalkyle ; et
Y représente un atome d'hydrogène ou de fluor.

**3.** Composition selon la revendication 2 dans laquelle ladite formule I représentant une aryloxypicolinamide est le picolinafen.

**4.** Composition selon la revendication 1 dans laquelle le second herbicide est l'imazaméthabenz-méthyle.

**5.** Composition selon la revendication 4 dans laquelle ladite formule I représentant une aryloxypicolinamide est le picolinafen.

**6.** Composition herbicide synergique, laquelle comprend un support agriculturellement acceptable et une quantité synergique efficace d'une combinaison trilatérale consistant essentiellement en :

une aryloxypicolinamide répondant à la formule I

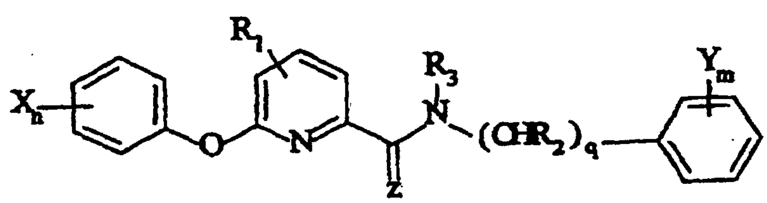

I

dans laquelle
Z représente un atome d'oxygène ou de soufre ;
$R_1$ représente un atome d'hydrogène ou d'halogène ou un groupe alkyle ou halogénoalkyle ;
$R_2$ représente un atome d'hydrogène ou un groupe alkyle ou alcényle ; le groupe X ou les groupes X, indépendamment les uns des autres, représentent chacun un atome d'halogène, ou un groupe alkyle ou alcoxy éventuellement substitué, préférentiellement un groupe halogénoalkyle, ou un groupe alcényloxy, cyano, carboxy, alcoxycarbonyle, (alkylthio)carbonyle, alkylcarbonyle, amido, alkylamido, nitro, alkylthio, halogénoalkylthio, alcènylthio, alcynylthio, alkylsulfinyle, alkylsulfonyle, alkyloxyiminoalkyle ou alcènyloximinoalkyle ;

n vaut 0 ou un entier de 1 à 5 ;

le groupe Y ou chacun des groupes Y, indépendamment les uns des autres représentent un atome d'halogène, ou un groupe alkyle, nitro, cyano, halogénoalkyle, alkoxy ou halogénoalkoxy ; et

m vaut 0 ou un entier de 1 à 5 ;

ou l'un de ses sels compatibles pour l'environnement ;
un second herbicide, lequel est un herbicide de type imidazolinone et un troisième herbicide lequel est le 2,4 - D

ou l'un des ses esters ou sels compatibles avec l'environnement.

**7.** Composition selon la revendication 6 répondant à la formule I de type aryloxypicolinamide dans laquelle
Z représente un atome d'oxygène ;
$R_1$ représente un atome d'hydrogène ;
q vaut 0 ;
$R_3$ représente un atome d'hydrogène ;
X représente un groupe halogénoalkyle ; et
Y représente un atome d'hydrogène ou de fluor.

**8.** Composition selon la revendication 7 dans laquelle ladite formule I représentant une aryloxypicolinamide est le picolinafen.

**9.** Composition selon la revendication 6 dans laquelle le second herbicide est l'imazaméthabenz-méthyle.

**10.** Composition selon la revendication 9 dans laquelle ladite formule I représentant une aryloxypicolinamide est le picolinafen.

**11.** Procédé pour le contrôle synergique des plantes indésirables, lequel comprend l'application sur un locus desdites plantes ou sur le feuillage ou sur les tiges desdites plantes une quantité synergique efficace des compositions selon l'une quelconque des revendications 1 à 10.